# EUROPÄISCHE PATENTSCHRIFT

(11) **EP 0 906 667 B1**
(45) Veröffentlichungstag und Bekanntmachung des Hinweises auf die Patenterteilung: **05.07.2000**
(21) Anmeldenummer: 97921669.4
(22) Anmeldetag: 19.04.1997
(51) Int. Cl.: H04B 1/713, H04Q 7/36

(54) **VERFAHREN ZUM BETREIBEN EINES NETZES**
PROCESS FOR OPERATING A NETWORK
PROCEDE D'EXPLOITATION D'UN RESEAU

(30) Priorität: 25.04.1996 DE 19616430
(43) Veröffentlichungstag der Anmeldung: 07.04.1999
(73) Patentinhaber: Altvater Airdata Systems GmbH & Co. KG, 74906 Bad Rappenau (DE)
(72) Erfinder: ALTVATER, Ulrich, D-74906 Bad Rappenau (DE); BARON, Heinrich, D-50321 Brühl (DE); BITSCH, Bernhard, D-68219 Mannheim (DE); HAAF, Peter, D-69118 Heidelberg (DE); KIESLICH, Bernd, D-74889 Sinsheim (DE); MÜLLER, Jürgen, D-74861 Neudenau (DE)
(74) Vertreter: Dreiss, Fuhlendorf, Steimle & Becker, Patentanwälte
(86) Internationale Anmeldenummer: EP9701979
(87) Internationale Veröffentlichungsnummer: WO9741648

(56) Entgegenhaltungen:
- DE-A- 4 407 544

## Beschreibung

Die vorliegende Erfindung betrifft ein Verfahren zum Betreiben eines Netzes von Sekundärnutzern, das Kanäle aus einem von Primärnutzern genutzten Frequenzspektrum im Frequenzsprungverfahren zur Datenübertragung verwendet, wobei ein von dem Netz von Sekundärnutzern jeweils ausgewählter Kanal vor einer möglichen Datenübertragung abgehört und daraufhin überprüft wird, ob Primärnutzer diesen Kanal zur Zeit belegen, und das Netz von Sekundärnutzern in Abhängigkeit von dem Ergebnis dieser Überprüfung entweder Daten über den ausgewählten Kanal überträgt oder diesen von der Datenübertragung ausschließt und einen neuen Kanal zur Überprüfung und möglichen Datenübertragung auswählt.

Ein derartiges Verfahren ist aus der DE 44 07 544 A1 bekannt.

Das bekannte Verfahren dient zur Übertragung von Datenpaketsätzen in einem Zusatznetz, das über Frequenzkanäle sendet, die zumindest zum Teil bereits in einem bestehenden Basisnetz zur digitalen Daten- und/oder Sprachübertragung verwendet werden. Bei diesem Verfahren wird in einem ersten Schritt ein von dem Basisnetz gerade nicht belegter Frequenzkanal ermittelt, woraufhin in einem zweiten Schritt ein Datenpaketsatz über den ermittelten Frequenzkanal übertragen wird. Diese Schritte werden nach Art einer Frequenzsprungtechnik zyklisch so lange wiederholt, bis alle Datenpaketsätze einer Sendung übertragen wurden.

Mit dem bekannten Verfahren ist es möglich, durch die Verwendung der Frequenzsprungtechnik bestehende Kanäle besser auszunutzen, ohne daß das jeweilige Basisnetz gestört wird.

Wie in der Frequenzsprungtechnik üblich, werden die einzelnen Paketdatensätze zeitlich gestaffelt über verschiedene Frequenzkanäle übertragen, wobei die Last gleichmäßig auf die zur Verfügung stehenden Kanäle verteilt wird, die gerade nicht von dem Basisnetz verwendet werden.

Wegen weiterer Einzelheiten des bekannten Verfahrens wird auf die eingangs genannte DE 44 07 544 verwiesen.

Die Auswahl eines gerade nicht von dem Basisnetz belegten Frequenzkanales erfolgt bei diesem Verfahren so, daß zunächst einer der mehreren Frequenzkanäle ausgewählt wird, woraufhin dann dieser ausgewählte Kanal abgehört wird, um zu überprüfen, ob das Basisnetz gerade auf diesem Frequenzkanal sendet. Wenn bei dieser Abhörung kein Signal empfangen wird, so wird davon ausgegangen, daß dieser Kanal von dem Zusatznetz verwendet werden kann.

Bei ersten Testeinsätzen des bekannten Verfahrens hat sich herausgestellt, daß es ohne Beeinträchtigung des Basisnetzes so lange einwandfrei arbeitet, wie die Bandbreiten der Empfänger des Zusatznetzes nicht wesentlich schmaler sind als die der Empfänger des Basisnetzes. Der Betrieb eines Zusatznetzes auf dem D1- oder D2-Netz bereitet somit keine Probleme.

Schwierigkeiten kann es jedoch bei der Verwendung des ISM-Frequenzbereiches geben, der bei 2,4 GHz angesiedelt ist. Bei dem ISM-Bereich (Industrial Scientific Medical Application) handelt es sich um einen nicht geschützten Bereich, in dem u.a. Mikrowellenherde abstrahlen, aber z. B. auch drahtlose Fernsehkameras sowie andere Primärnutzer arbeiten. Die Sender und Empfänger dieser Primärnutzer sind oft sehr breitbandig, während die Empfänger des Zusatznetzes sehr schmalbandig sind, z. B. nur 1 MHz breit sind, um in dem Basisnetz eine große Anzahl von Kanälen für das Zusatznetz zur Verfügung zu haben.

In dem ISM-Bereich von 2,40 - 2,4835 GHz werden z.B. 80 der eigentlich 83 zur Verfügung stehenden Kanäle verwendet.

Ein sehr breitbandiger Primärnutzer überdeckt nun eine ganze Anzahl dieser Kanäle, wobei in den Randbereichen der Glockenkurve des Spektrums des Primärnutzers die Energie des Primärsenders so gering ist, daß ein Sekundärnutzer in den dort liegenden Kanälen den Primärnutzer nicht mehr erkennen kann. Das Netz der Sekundärnutzer wird folglich auch auf Kanälen senden, die in den Randbereichen der Glockenkurven der Primärnutzer liegen, so daß der Empfänger des Primärnutzers dieses Signal wegen der größeren Bandbreite dennoch auffangen kann, wodurch eine empfindliche Störung des Primärnutzers möglich ist. Ferner decken modulierte Hochfrequenzsignale nicht zu jedem Zeitpunkt der Sendeaktivität die gesamte eigene Bandbreite ab, so daß ein sehr kurzes, schmalbandiges Abhören in einem eigentlich benutzten Bereich ebenfalls zu einer fälschlichen Annahme der freien Verfügbarkeit führen kann. Bei den erwähnten drahtlosen Fernsehkameras führt dies zu einer Störung, bei der z.B. in dem übertragenen Bild schwarze Balken auftauchen.

Prinzipiell tritt dieses Problem in jedem Netz auf, wo Primärnutzer mit einer größeren Bandbreite senden und empfangen als Sekundärnutzer. Da eine derartige Störung der Primärnutzer vermieden werden muß, beschäftigt sich die vorliegende Erfindung mit genau diesem Problem.

Vor diesem Hintergrund ist es Aufgabe der vorliegenden Erfindung, das eingangs genannte Verfahren auf möglichst einfache Weise so weiterzubilden, daß eine Störung von Primärnutzern zuverlässig vermieden wird, die breitbandiger arbeiten als die Sekundärnutzer.

Bei dem eingangs genannten Verfahren wird diese Aufgabe erfindungsgemäß dadurch gelöst, daß zusätzlich zu dem ausgewählten Kanal weitere Kanäle zumindest einmal von der Datenübertragung ausgeschlossen werden, wenn das Abhören des ausgewählten Kanales ergibt, daß Primärnutzer auf diesem Kanal gerade senden.

Die der Erfindung zugrundeliegende Aufgabe wird auf diese Weise vollkommen gelöst. Die Erfinder der vorliegenden Anmeldung haben nämlich erkannt, daß es bereits auf diese einfache Weise möglich ist, eine Störung breitbandiger Primärnutzer zu vermeiden. Wenn ein Sekundärnutzer einen Primärnutzer auf einem ausgewählten Kanal erkennt, so sperrt er z. B. weitere Kanäle im Bereich dieses ausgewählten Kanales, so daß diese bei einem der nächsten Frequenzsprünge nicht verwendet werden, auch wenn das Abhören dieser Kanäle keine Signale von Primärnutzern ergeben sollte. Mit anderen Worten, wenn einmal ein ausgewählter Kanal im mittleren Breich der Glockenkurve eines Primärnutzers liegt, so werden auch die in den mit schwächerer Sendeenergie versehenen Randbereichen der Glockenkurve liegenden Kanäle zunächst einmal von dem Sekundärnutzer nicht mehr verwendet. Da sämtliche Kanäle des zur Verfügung stehenden Frequenzspektrums statistisch gleichverteilt von dem Sekundärnutzer verwendet werden, wird damit eine mögliche Interferenz mit dem Primärnutzer für eine gewisse Zeitspanne verhindert. Solange der Primärnutzer auf Sendung ist, werden aber immer wieder ausgewählte Kanäle im mittleren Bereich seiner Glockenkurve liegen, so daß immer wieder Kanalbereiche für die Sekundärnutzer gesperrt werden.

Es hat sich herausgestellt, daß dieses sehr einfache Verfahren ausreicht, um Störungen von Primärnutzern in großem Maße zu vermeiden.

In einer Weiterbildung ist es bevorzugt, wenn die weiteren Kanäle in Abhängigkeit von der Lage des ausgewählten Kanales in dem Frequenzspektrum bestimmt werden, wobei die weiteren Kanäle vorzugsweise eine erste Zahl von Kanälen unmittelbar oberhalb und eine zweite Zahl von Kanälen unmittelbar unterhalb des ausgewählten Kanales umfassen und die erste und die zweite Zahl vorzugsweise in Abhängigkeit von der Lage des ausgewählten Kanales in dem Frequenzspektrum bestimmt werden.

Hier ist von Vorteil, daß bei der Bestimmung der weiteren Kanäle Kenntnisse über die Lage der Primärnutzer in dem Frequenzspektrum berücksichtigt werden können. Wenn es z. B. bekannt ist, daß in einem bestimmten Frequenzbereich des Spektrums immer bestimmte Primärnutzer auftauchen, die bestimmte Kanäle belegen, so kann bei einem Belegt-Zustand eines dieser bestimmten Kanäle dafür gesorgt werden, daß der Sekundärnutzer sämtliche Kanäle sperrt, auf denen der so erkannte Primärnutzer sendet.

Im einfachsten Fall wird man hier eine bestimmte Zahl von Kanälen oberhalb und unterhalb des ausgewählten Kanales sperren, wobei insbesondere in den Randbereichen des zur Verfügung stehenden Frequenzspektrums die Zahl der oberhalb sowie unterhalb des ausgewählten Kanales liegenden, zu sperrenden Kanäle unterschiedlich sein kann.

Insbesondere ist es bevorzugt, wenn aus den Abhörergebnissen der von der Datenübertragung ausgeschlossenen Kanäle das Frequenzspektrum des diese Kanäle belegenden Primärnutzers interpoliert und sämtliche in diesem Frequenzspektrum liegenden Kanäle zumindest einmal von der Datenübertragung ausgeschlossen werden.

Hier ist von Vorteil, daß auch solche Primärnutzer erkannt werden können, deren absolute Lage im Frequenzspektrum veränderbar ist, deren Bandbreite jedoch bekannt ist. Andererseits ist es auch möglich, Primärnutzer zu schützen, deren Frequenzspektrum dem Sekundärnutzer vorab nicht bekannt war. Aus der Lage der gesperrten Kanäle im Frequenzspektrum sowie ggf. aus deren Signalstärke wird eine Glockenkurve interpoliert, woraufhin dann sämtliche in den Bereich der Glockenkurve fallenden Kanäle für eine gewisse Zeit oder nach einem noch zu beschreibenden Verfahren von der Übertragung der Paketdatensätze ausgeschlossen werden.

Hierbei ist es bevorzugt, wenn jedem Kanal zumindest eine Zustandsvariable zugeordnet ist, deren Wert zyklisch aktualisiert wird und angibt, ob und in welcher Form der ihr zugeordnete Kanal durch Primärnutzer belegt ist, wobei vorzugsweise die zumindest eine Zustandsvariable des ausgewählten Kanales sowie die der weiteren Kanäle auf einen Sperrwert gesetzt werden, wenn das Abhören des ausgewählten Kanales ergibt, daß ein Primärnutzer auf diesem Kanal gerade sendet.

Hier ist von Vorteil, daß eine Matrix oder auch eine einfache Liste angelegt werden kann, die die Zustandsvariablen sämtlicher zur Verfügung stehender Kanäle beinhaltet. Anhand dieser Liste oder Matrix sowie anhand der Werte der einzelnen Zustandsvariablen kann dann auf einfache Weise der Belegungsgrad des gesamten Frequenzspektrums ermittelt werden. Es handelt sich hier sozusagen um einen Spektrumanalysator, der angibt, welche Kanäle gerade belegt sind. Diese Liste oder Matrix der Zustandsvariablen kann dann für die obenerwähnte Interpolation des Frequenzspektrums des Primärnutzers verwendet werden. Eine Spalte dieser Matrix kann Werte beinhalten, die einen Wartezeitraum definieren, währenddessen ein Kanal selbst bei negativem Abhörergebnis nicht genutzt werden darf.

Weiter ist es bevorzugt, wenn zumindest einigen Kanälen weitere Zustandsvariablen zugeordnet sind, deren Werte aus Abhörergebnissen gebildet und dazu verwendet werden, den Wert der zumindest einen Zustandsvariablen zu aktualisieren.

Hier ist von Vorteil, daß die Zustandsvariablen nicht nur den reinen Belegtzustand in Form einer Ja/Nein-Entscheidung sondern weitere Informationen über den jeweils ausgewählten Kanal liefern können. Eine der weiteren Zustandsvariablen kann bspw. die mittlere Signalstärke des auf dem ausgewählten Kanal sendenden Primärsenders enthalten, während eine weitere Zustandsvariable z.B. die durchschnittliche "Trefferquote" bei der Abhörung des ausgewählten Kanales wiedergeben kann. Aus diesen weiteren Informationen über den Zustand des ausgewählten Kanales kann dann abgeleitet werden, ob die zumindest eine Zustandsvariable inkrementiert oder dekrementiert werden muß oder aber ihren ursprünglichen Wert beibehält. Ferner können die Werte dieser weiteren Zustandsvariablen dazu verwendet werden, die Zahl und Lage der zu sperrenden Kanäle zu bestimmen, wie dies weiter unten noch ausführlicher beschrieben wird.

Es ist besonders bevorzugt, wenn bei jeder Aktualisierung die zumindest eine Zustandsvariable dekrementiert/inkrementiert wird, sofern sie nicht bereits einen Freigabewert aufweist, der angibt, daß der Kanal nicht durch Primärnutzer belegt ist.

Auf diese einfache Weise wird bei Verwendung einer Wartezeitvariablen eine reine Zeitverzögerung erreicht, wobei hier insbesondere auf den Unterschied zwischen Belegung durch Primärnutzer sowie Senden durch Primärnutzer hingewiesen werden soll. Wie oben bereits ausführlich erwähnt, ist es durchaus möglich, daß wegen des breitbandigen Senders eines Primärnutzers Kanäle belegt sind, obwohl die Sekundärnutzer mit ihren schmalbandigen Empfängern auf diesen Kanälen zumindest zeitweise keine Sendungen von Primärnutzern "abhören" können. Wenn jetzt ein Primärnutzer erkannt und eine entsprechende Anzahl von Kanälen gesperrt wurde, so kann durch die Größe des Sperrwertes eine bestimmte Zeitverzögerung eingestellt werden, während der Sekundärnutzer auf den gesperrten Kanälen nicht senden, obwohl diese Kanäle als frei abgehört werden.

Wenn der Sperrwert z. B. gleich 5 und der Freigabewert gleich 0 gesetzt wird, so kann ein gesperrter Kanal frühestens dann wieder verwendet werden, wenn er in fünf aufeinanderfolgenden Zeitschlitzen nicht erneut mit einem Sperrwert belegt wurde. Es ist nämlich durchaus möglich, daß ein gesperrter Kanal, dessen Zustandsvariable bereits teilweise dekrementiert wurde, deshalb erneut ganz gesperrt wird, weil er zu den weiteren Kanälen eines ausgewählten Kanales gehört, auf dem Primärnutzer gerade senden.

Es ist jedoch weiter bevorzugt, wenn nur die zumindest eine Zustandsvariable des ausgewählten Kanales dekrementiert/inkrementiert wird, wenn das Abhören dieses Kanales ergibt, daß Primärnutzer auf ihm gerade nicht senden.

Hier ist von Vorteil, daß eine Störung der Primärnutzer mit noch größerer Zuverlässigkeit verhindert wird. Hier muß nämlich jetzt jeder Kanal einzeln wieder freigegeben werden, wozu es erforderlich ist, daß er so oft als ausgewählter Kanal nicht erneut gesperrt wurde, wie dies durch den Sperrwert bzw. die Differenz zwischen Sperrwert und Freigabewert vorgegeben ist.

Bei dem obigen Zahlenbeispiel bedeutet dies, daß ein Kanal erst wieder freigegeben wird, wenn er fünfmal ausgewählt wurde und jedesmal keine Sendung von Primärnutzern abgehört werden konnte. Da sämtliche zur Verfügung stehenden Kanäle statistisch gleichverteilt ausgewählt werden, bedeutet dies, daß ein belegter Kanal erst wieder freigegeben wird, wenn sämtliche zur Verfügung stehenden Kanäle fünfmal ausgewählt wurden. Wenn die Zahl der zur Verfügung stehenden Kanäle bspw. gleich 80 ist und jeder Zeitschlitz für die Übertragung eines Paketdatensatzes nach einem Frequenzsprung 7 ms beträgt, so bleibt ein einmal gesperrter Kanal für ca. drei Sekunden von der Datenübertragung ausgeschlossen.

Allgemein ist es dabei bevorzugt, wenn nach der Aktualisierung zumindest der Wert der zumindest einen Zustandsvariablen des ausgewählten Kanals auf einen Freigabewert abgefragt wird, um zu entscheiden, ob dieser Kanal zur Datenübertragung zur Verfügung steht.

Hier ist von Vorteil, daß sich insgesamt ein sehr einfaches Verfahren ergibt. Der ausgewählte Kanal wird zunächst abgehört, woraufhin dann die Zustandsvariable dieses Kanales und ggf. die weiterer Kanäle aktualisiert wird, bevor dann die Zustandsvariable des ausgewählten Kanales daraufhin abgefragt wird, ob dieser Kanal zur Datenübertragung zur Verfügung steht.

Ferner ist es bevorzugt, wenn beim Abhören eines ausgewählten Kanales dessen Signalpegel in zeitlichen Abständen N mal auf das Überschreiten einer Signalschwelle abgetastet wird, wobei der Signalpegel des abgetasteten Kanales die Signalschwelle vorzugsweise M mal überschreiten muß, damit ein Senden von Primärnutzern auf diesem Kanal erkannt wird. M ist dabei vorzugsweise größer oder gleich N/2. Allgemein gilt jedoch 0 < M ≤ N.

Hier ist von Vorteil, daß durch die größere Anzahl von Abtastungen sichergestellt wird, daß der ausgewählte Kanal nicht gerade während einer "Sendepause" oder Übertragungslücke abgefragt wurde. Weiter ist von Vorteil, daß die Signalschwelle sehr niedrig bereits im Bereich des Rauschens angesetzt werden kann, weil nicht bereits eine beliebige Überschreitung der Signalschwelle, sondern erst M Überschreitungen ausreichen, damit eine Sendung eines Primärnutzeres auf diesem Kanal angenommen wird. Ein besonders sicheres Erkennen einer derartigen Sendung auf einem ausgewählten Kanal ergibt sich, wenn mehr als die Hälfte der Abtastungen zu einem Signal oberhalb der Signalschwelle führen muß.

Weiter ist es bevorzugt, wenn M dynamisch in Abhängigkeit von einer Auswertung des Abhörens des ausgewählten Kanales bestimmt wird.

Hier ist von Vorteil, daß das neue Verfahren nicht auf die Nutzung einer reinen Wartezeitvariablen beschränkt ist, vielmehr können auch weitere Zustandsvariablen verwendet werden, zu denen etwa die durchschnittliche Trefferquote M beim Abhören eines ausgewählten Kanales oder aber der durchschnittliche Signalpegel des abgehörten Kanales zählen können. Diese Variablen können z.B. so ausgewertet werden, daß in Abhängigkeit des gemessenen Signalpegels die Anzahl der weiteren Kanäle variiert wird. Bei der Bewertung der einzelnen Abhörergebnisse muß die Trefferquote M ferner nicht zwingend größer oder gleich N/2 sein, auch bei einer geringeren Trefferquote, die jedoch mit aufeinanderfolgenden starken Meßpegeln einhergeht, kann eine Kanalbelegung angenommen werden. Die Zustandsvariable kann ferner dazu verwendet werden, die zusätzlich als belegt zu kennzeichnenden Kanäle oberhalb und unterhalb des ausgewählten Kanales unabhängig voneinander festzulegen, so daß die weiteren Kanäle nicht zwangsläufig symmetrisch zu dem ausgewählten Kanal liegen.

Zusammengefaßt liegt der Vorteil des neuen Verfahrens darin, daß nicht ein einfaches "Listen before Talking"-Verfahren durchgeführt wird, sondern daß zusätzlich zu dem ausgewählten Kanal noch weitere Kanäle gesperrt werden, wenn eine Sendung eines Primärnutzers auf dem ausgewählten Kanal erkannt wird. Durch das Sperren weiterer Kanäle wird zuverlässig dafür gesorgt, daß auch die Randbereiche der spektralen Glockenkurve eines Primärnutzers im Frequenzband geschützt werden können. Zwar läßt sich auch durch dieses Verfahren nicht vermeiden, daß in ganz bestimmten Ausnahmefällen der neu ans Netz gehende Sekundärnutzer zumindest einmal im Randbereich einer derartigen Glockenkurve sendet. Dies geschieht dann, wenn einer der ersten ausgewählten Kanäle des Sekundärnutzers genau am Rand einer derartigen Glockenkurve liegt, wo zwar der Empfänger des Primärnutzers noch Signale aufnehmen kann, die Sendeleistung des Primärnutzers jedoch bereits so gering ist, daß der Sekundärnutzer sie nicht mehr empfangen kann. Die Zeitschlitze sind bei einen Sekundärnutzer jedoch so kurz, liegen z. B. bei 7 Millisekunden, so daß die dadurch bewirkte einmalige Störung von dem Primärnutzer nicht bemerkt wird. Im Laufe der Zeit werden dann jedoch zunächst sämtliche anderen Kanäle des Frequenzspektrums einmal ausgewählt, bevor der Kanal am Rande der Glockenkurve wieder an die Reihe kommt. Zuvor wurden jedoch bereits Kanäle im Inneren der Glockenkurve des Primärnutzers ausgewählt und von der Übertragung ausgeschlossen, da auf ihnen eine Sendung von Primärnutzern erkannt wurde. Im Zusammenhang mit dem Ausschluß dieser ausgewählten Kanäle wurden weitere Kanäle von der Übertragung ausgeschlossen, zu denen aufgrund der Interpolation auch die Kanäle im Randbereich der Glockenkurve zählen.

Bei diesem Ausschluß wurden die Zustandsvariablen der Kanäle im Randbereich der Glockenkurve mit einem Sperrwert versehen, so daß sie entsprechend der Größe des Sperrwertes mehrmals ausgewählt werden müssen, bevor auf ihnen wieder gesendet wird.

Dieses neue Verfahren ermöglicht somit eine Optimierung bei der Ausnutzung von zur Verfügung stehenden Kanalkapazitäten auch in solchen Netzen, in denen eine Störung der Primärnutzer durch die Sekundärnutzer mit sehr großer Sicherheit vermieden werden muß.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: ein schematisches Beispiel eines Frequenzspektrums eines Basisnetzes, dem ein Zusatznetz überlagert wird;
- Fig. 2: die Aufteilung eines Zeitschlitzes des Zusatznetzes auf die verschiedenen Operationen;
- Fig. 3: in einem anderen Maßstab den Beginn des Zeitschlitzes aus Fig. 2;
- Fig. 4: eine schematische Darstellung der Änderung der Inhalte von Zustandsvariablen für einen Bereich des Frequenzspektrums aus Fig. 1; und
- Fig. 5: ein schematisches Flußdiagramm des neuen Verfahrens.

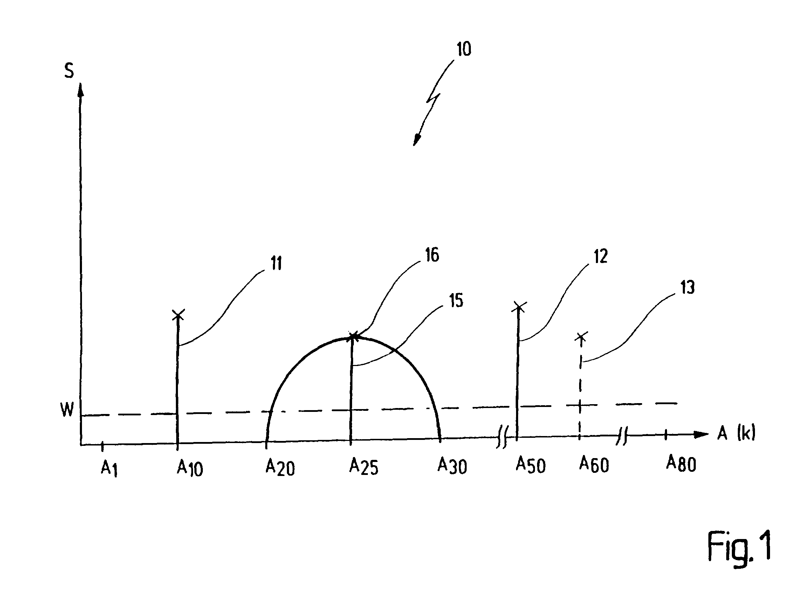

Fig. 1 zeigt in schematischer Weise ein von Primärnutzern genutztes Frequenzspektrum 10, das auch von Sekundärnutzern in einem Zusatznetz genutzt wird. Das Frequenzspektrum umfaßt beispielhaft f(k) Kanäle f₁ bis f₈₀, wobei bei f₁₀ und f₅₀ jeweils ein Primärnutzer 11, 12 sendet, während bei f₆₀ ein Sekundärnutzer 13 des Zusatznetzes zu finden ist.

Neben den sehr schmalbandigen Primärnutzern 11, 12 sowie dem Sekundärnutzer 13 ist noch ein weiterer Primärnutzer 15 vorhanden, dessen Mittenfrequenz bei f₂₅ liegt. Dieser Primärnutzer 15 ist jedoch sehr breitbandig und weist eine spektrale Glockenkurve 16 auf, die sich von f₂₀ bis zu f₃₀ erstreckt. In den Randbereichen dieser Glockenkurve, also oberhalb von f₂₀ und unterhalb von f₃₀ ist die Sendeenergie S des Primärnutzers 15 jedoch so gering, daß sie unterhalb einer detektierbaren Schwelle W liegt, so daß ein Sekundärnutzer z. B. auf den Kanälen f₂₁ sowie f₂₉ kein Signal empfangen könnte und diesen Kanal daher als frei ansehen würde.

Die Sekundärnutzer verwenden die Kanäle f₁ bis f₈₀ zur Datenübertragung nach Art der Frequenzsprungtechnik, wobei zur Vermeidung von Störungen der Primärnutzer zu Beginn einer jeden möglichen Datenübertragung überprüft wird, ob der jeweils gerade ausgewählte Frequenzkanal von Primärnutzern belegt ist. Das grundlegende Verfahren wird ausführlich in der eingangs erwähnten DE 44 07 544 A1 beschrieben, so daß auf weitere Erläuterungen hier verzichtet werden kann. Es sei lediglich bemerkt, daß das Zusatznetz mit einer bestimmten Systemzeit arbeitet, die allen Endgeräten in dem Zusatznetz gemeinsam ist. Anhand dieser Systemzeit bestimmt jedes Endgerät, auf welchem Kanal gerade gesendet werden darf und somit empfangen werden kann. Der so ausgewählte Kanal wird durch die Systemzeit und ggf. durch die Adresse des empfangenden Endgerätes bestimmt.

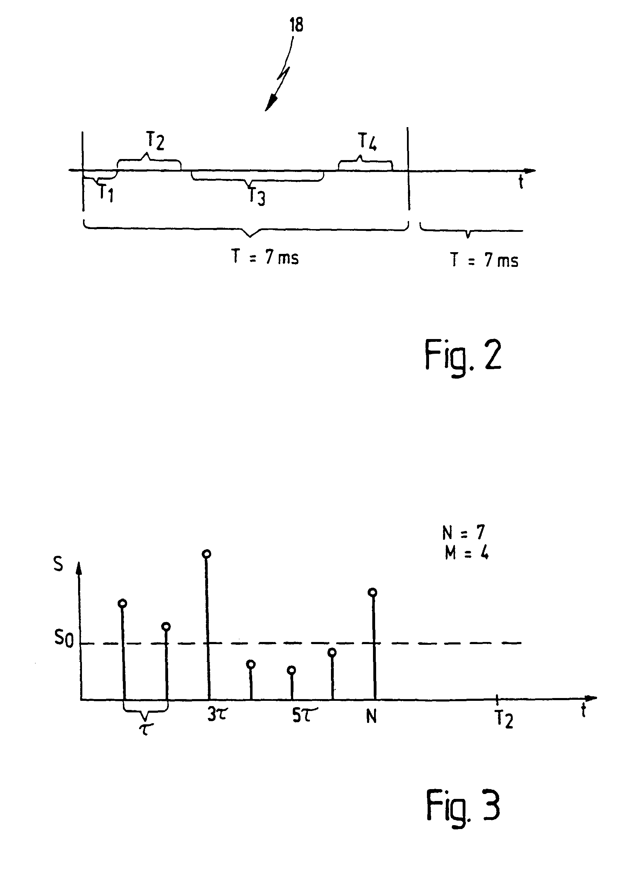

Mit anderen Worten, zu jedem Zeitpunkt wissen ein sendendes sowie ein empfangendes Endgerät, über welchen Kanal diese Sendung zu erfolgen hat. Damit diese mögliche Sendung nicht einen Primärnutzer stört, wird vor der Aussendung eines Datenpaketes in dem jeweiligen Zeitschlitz überprüft, ob der ausgewählte Kanal gerade von einem Primärnutzer belegt wird. Die erfindungsgemäß hierzu erforderlichen einzelnen Operationen werden jetzt anhand der schematischen Darstellung der Fig. 2 erörtert.

Fig. 2 zeigt auf der Zeitachse einen schematisch angedeuteten Zeitschlitz 18 von T = 7 ms. Zu Beginn dieses Zeitschlitzes 18 wird zunächst der Sender des sendenden Endgerätes auf den ausgewählten Kanal eingestellt, was während der Zeit T₁ = 50 ns erfolgt.

Daraufhin wird während der Zeit T₂ = 500 µs dieser Kanal auf Belegung abgefragt. Wenn der Kanal frei ist, so wird während der Zeit T₃, die sich an T₂ anschließt, wenn auch nicht unmittelbar, ein Datenpaket übertragen, wozu 4 ms zur Verfügung stehen. Dieses Datenpaket besteht in bekannter Weise aus einem Header, einem Datenpaket von 256 Bit sowie einem Trailer.

Nach der Übertragung des Datenpaketes wird bei T₄ noch eine gewisse Zeit gewartet, ob der Empfänger den Empfang des Datenpaketes bestätigt. Sofern diese Bestätigung eingeht, wird in dem nächsten Zeitschlitz das nächste Datenpaket übertragen, bleibt die Bestätigung aus, wird dasselbe Datenpaket in dem nächsten Zeitschlitz noch einmal übertragen.

Wenn bei der Überprüfung in T₂ erkannt wird, daß der ausgewählte Kanal bereits durch Primärnutzer belegt ist, verstreicht der Rest der Zeit des Zeitschlitzes ungenutzt, und zu Beginn des nächsten Zeitschlitzes beginnen die soeben beschriebenen Operationen von vorne.

Es ist nicht möglich, aus dem Raster der Zeitschlitze herauszuspringen, da diese Zeitschlitze der Synchronisation zwischen dem Sender und dem Empfänger dienen, die nicht gestört werden darf.

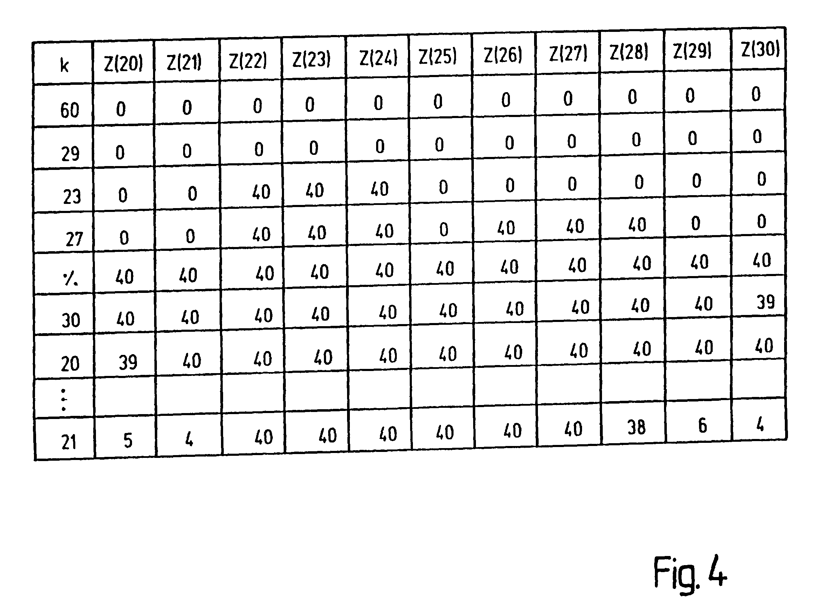

In Fig. 3 ist schematisch der Beginn der Überprüfung während der Zeit T₂ dargestellt. Fig. 3 zeigt die Signalamplitude S des ausgewählten Kanales über der Zeit, die in zeitlichen Abständen τ insgesamt N mal abgetastet wird. Bei dieser Abtastung wird abgefragt, ob der Signalpegel oberhalb oder unterhalb eines Schwellwertes S₀ liegt. Liegt der Signalpegel M mal oberhalb der Signalschwelle S₀, so wird davon ausgegangen, daß ein Primärnutzer den ausgewählten Kanal gerade verwendet. Die Signalschwelle S₀ liegt in der Nähe des Rauschens, so daß eine gewisse Zahl N von Abtastungen erforderlich ist, um mit einer gewissen Sicherheit eine Sendung des Basisnetzes erkennen bzw. ausschließen zu können. N ist hierbei vorzugsweise = 10, wobei M z.B. 5 betragen kann. Wenn mehr als die Hälfte der Abtastungen oberhalb der Signalschwelle S₀ liegt, kann mit einer gewissen Sicherheit davon ausgegangen werden, daß tatsächlich eine Sendung eines Primärnutzers vorliegt, so daß der ausgewählte Kanal nicht zur Datenübertragung im Zusatznetz zur Verfügung steht. Diese Information wird jetzt weiterverarbeitet, um den Primärnutzer sicher vor Störungen durch das Zusatznetz zu schützen. Wie dies geschieht, wird jetzt anhand der schematischen Darstellung der Fig. 4 gezeigt.

Jedem Kanal f₁ bis f₈₀ des Frequenzspektrums 10 wird eine Zustandsvariable Z(k) zugeordnet, wobei k der Ordnungsnummer des jeweiligen Frequenzkanals entspricht. Fig. 4 zeigt jetzt eine Tabelle, bei der in Spalten nebeneinander die Werte der Zustandsvariablen für die Frequenzen f₂₀ bis f₃₀ der spektralen Glockenkurve 16 des Primärnutzers 15 dargestellt sind.

In der ersten Spalte der Tabelle aus Fig. 4 ist die Ordnungszahl des jeweils ausgewählten Kanals angegeben.

In der zweiten Reihe beträgt k = 60, die Werte der Zustandsvariablen Z(20) bis Z(30) sind jeweils = 0. In der nächsten Reihe ist k = 29, der ausgewählte Kanal liegt also am Rand der Glockenkurve 16. Die Sendeenergie des Primärnutzers 15 ist hier so gering, daß das Zusatznetz keine Sendung des Basisnetzes erkennt, die Zustandsvariablen werden nicht verändert, und das Zusatznetz sendet auf dem Kanal 29 ein Datenpaket aus. Diese Übertragung dauert 4 ms, so daß das Basisnetz nicht merklich gestört wird.

In der nächsten Reihe wird der Kanal 23 ausgewählt, auf dem das Zusatznetz eine Sendung des Primärnutzers 15 erkennt. Die Zustandsvariable Z(23) wird mit einem Sperrwert 40 besetzt. Darüber hinaus werden auch noch weitere Kanäle mit diesem Sperrwert von 40 besetzt, nämlich der unmittelbar oberhalb sowie der unmittelbar unterhalb des Kanales 23 liegende Kanal 24 bzw. 22.

In der nächsten Reihe wird der Kanal 27 ausgewählt, auf dem ebenfalls eine Sendung erkannt wird, so daß auch die Kanäle 26, 27, 28 mit einer Zustandsvariablen vom Wert 40 belegt werden. Anhand der Belegung der Kanäle 22, 23, 24, 26, 27, 28 mit einem Sperrwert erkennt das Zusatznetz jetzt den Primärnutzer 15 und interpoliert seine Glockenkurve 16, so daß in der nächsten Spalte in Fig. 4 sämtliche Kanäle Z(20) bis Z(30) mit dem Sperrwert 40 besetzt sind.

In den nächsten beiden Reihen sei angenommen, daß die Kanäle 30 bzw. 20 ausgewählt werden, auf denen das Zusatznetz keine Sendungen von Primärnutzern erkennen kann, obwohl der Primärnutzer 15 noch auf Sendung ist. Die Zustandsvariablen Z(20) sowie Z(30) werden jeweils um 1 dekrementiert, die ausgewählten Kanäle 30 bzw. 20 werden jedoch nicht zur Datenübertragung verwendet, da die Zustandsvariablen Z(20) sowie Z(30) noch größer als 0 sind.

In der letzten Reihe der Tabelle aus Fig. 4 sei angenommen, daß eine Zeit vergangen ist, während der der Primärnutzer 15 im wesentlichen auf Sendung war. In den Randbereichen der Glockenkurve 16 sind die Zustandsvariablen Z(20), Z(21), Z(29) sowie Z(30) inzwischen sehr weit dekrementiert worden, haben den Wert 0 jedoch noch nicht erreicht. Wenn jetzt der Primärnutzer 15 abgeschaltet wird, werden die Kanäle im Randbereich der Glockenkurve sehr schnell wieder zur Datenübertragung herangezogen werden, während dies bei den Kanälen im mittleren Bereich der Glockenkurve noch eine gewisse Weile dauert.

Sofern auf die Interpolation des Spektrums verzichtet wird, wie dies in der sechsten Reihe der Tabelle aus Fig. 4 angedeutet wird, so nehmen die Werte der Zustandsvariablen Z(20) bis Z(30) im Laufe der Zeit eine Verteilung an, wie sie der Glockenkurve 16 entspricht, sofern der Primärnutzer 15 lange genug auf Sendung bleibt. Wenn der Primärnutzer 15 abgeschaltet wird, können dann von den Randbereichen her die Kanäle, die von der Glockenkurve 16 bedeckt werden, wieder von dem Zusatznetz verwendet werden.

Selbstverständlich ist es alternativ möglich, bei Erkennen einer Sendung von Primärnutzern auf einem ausgewählten Kanal k nicht nur die beiden Nachbarkanäle, sondern weitere Kanäle mit dem Sperrwert zu besetzen und auf eine Interpolation des Spektrums ganz zu verzichten. Andererseits kann das Zusatznetz auch mit Vorkenntnissen über die am häufigsten auftretenden Primärnutzer versehen werden, so daß bei Erkennen einer Sendung auf einem bestimmten Kanal relativ schnell der Primärnutzer erkannt und die von seiner Glockenkurve abgedeckten Kanäle gesperrt werden können.

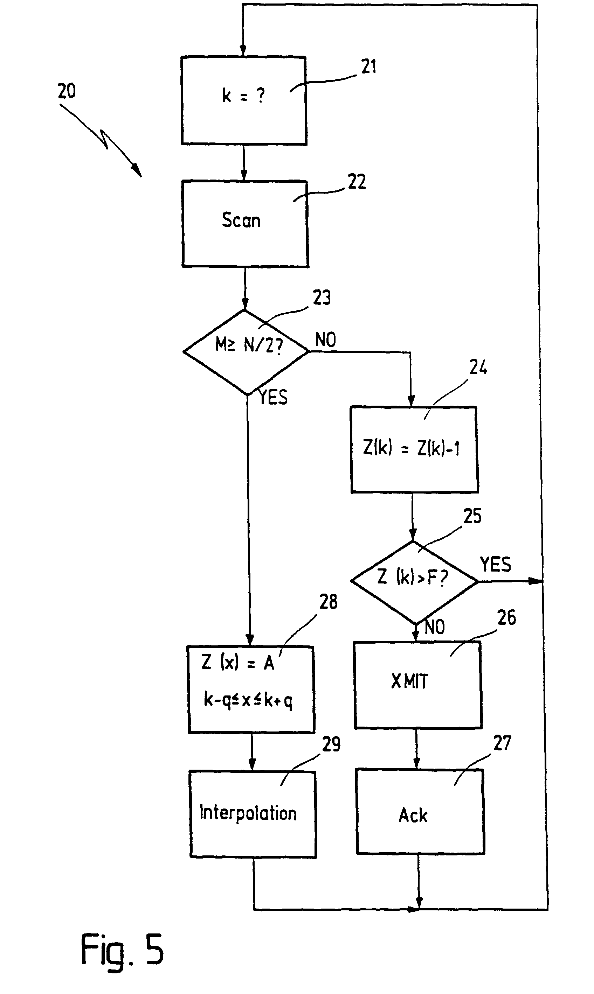

In Fig. 5 schließlich ist noch ein Flußdiagramm 21 dargestellt, mit dessen Hilfe jetzt noch einmal das neue Verfahren umfassend beschrieben werden soll.

Im Schritt 21 wird zunächst ein Kanal k eingestellt, der dann im Schritt 22 abgetastet wird, wie dies anhand der Fig. 3 beschrieben wurde. Im Schritt 23 wird abgefragt, ob die Zahl M der Abtastungen, die oberhalb der Signalschwelle S₀ lagen, den erforderlichen Wert aufweisen. Ist dies nicht der Fall, wird davon ausgegangen, daß Primärnutzer auf dem ausgewählten Kanal k zur Zeit nicht senden.

In diesem Fall wird im Schritt 24 die Zustandsvariable Z(k) des ausgewählten Kanals um 1 dekrementiert. Im Schritt 25 wird dann abgefragt, ob die Zustandsvariable Z(k) noch größer als der Freigabewert F ist. Ist dies der Fall, kehrt das Verfahren zum Schritt 21 zurück, wo zu Beginn des nächsten Zeitschlitzes ein neuer Kanal ausgewählt wird.

Ist Z(k) dagegen kleiner oder gleich groß F, so gilt der ausgewählte Kanal als nicht von einem Primärnutzer belegt. Im Schritt 26 wird dann ein Datenpaket ausgesendet, woraufhin dann im Schritt 27 noch eine bestimmte Zeit auf eine Bestätigung des Empfängers gewartet wird. Daraufhin kehrt das Verfahren zum Schritt 21 zurück.

Wenn dagegen im Schritt 23 erkannt wurde, daß ein Primärnutzer gerade auf dem ausgewählten Kanal k sendet, so werden die Zustandsvariablen Z(x) von einigen Kanälen auf einen Sperrwert A gesetzt. Neben dem ausgewählten Kanal k werden noch q-Kanäle oberhalb sowie p unterhalb des Kanals k mit einer Zustandsvariablen Z = A versehen. In Fig. 5 wird jedoch p = q angenommen. Dies erfolgt im Schritt 28.

In dem sich optional anschließenden Schritt 29 kann wahlweise noch eine Interpolation des Spektrums erfolgen, wie dies anhand der Tabelle aus Fig. 4 im Zusammenhang mit der sechsten Reihe bereits erörtert wurde. Daraufhin kehrt das Verfahren zum Schritt 21 zurück, der zu Beginn des nächsten Zeitschlitzes erneut ausgeführt wird.

Das Flußdiagramm 21 aus Fig. 5 stellt einen sehr einfachen Fall für die Implementierung des neuen Verfahrens dar, bei dem eine Art Wartezeitvariable verwendet wird. Die Bestimmung der weiteren Kanäle, die von der Übertragung zunächst ausgeschlossen werden, kann jedoch von weiteren Variablen abhängen, etwa der durchschnittlichen Trefferquote M beim Abhören oder des durchschnittlichen Signalpegels. In Abhängigkeit vom gemessenen Signalpegel kann die Anzahl der weiteren Kanäle z.B. ebenfalls variiert werden, wobei diese weiteren Kanäle darüber hinaus nicht zwangsläufig symmetrisch zu dem ausgewählten Kanal liegen müssen.

## Patentansprüche

1. Verfahren zum Betreiben eines Netzes von Sekundärnutzern, das Kanäle (f) aus einem von Primärnutzern (11, 12, 15) genutzten Frequenzspektrum (10) im Frequenzsprungverfahren zur Datenübertragung verwendet, wobei ein von dem Netz von Sekundärnutzern jeweils ausgewählter Kanal (k) vor einer möglichen Datenübertragung abgehört und daraufhin überprüft wird, ob Primärnutzer diesen Kanal (k) zur Zeit belegen, und das Netz von Sekundärnutzern in Abhängigkeit von dem Ergebnis dieser Überprüfung entweder Daten über den ausgewählten Kanal (k) überträgt oder diesen von der Datenübertragung ausschließt und einen neuen Kanal (k) zur Überprüfung und möglichen Datenübertragung auswählt, **dadurch gekennzeichnet,** dass zusätzlich zu dem ausgewählten Kanal (k) weitere Kanäle (k - p, k + q) im Bereich des ausgewählten Kanales (k) bei einem der nächsten Frequenzsprünge zumindest einmal von der Datenübertragung ausgeschlossen werden, wenn das Abtasten des ausgewählten Kanales (k) ergibt, dass Primärnutzer auf diesem Kanal (k) gerade senden.

2. Verfahren nach Anspruch 1, dadurch gekennzeichnet, daß die weiteren Kanäle (k - p, k + q) in Abhängigkeit von der Lage des ausgewählten Kanales (k) in dem Frequenzspektrum (10) bestimmt werden.

3. Verfahren nach Anspruch 1 oder Anspruch 2, dadurch gekennzeichnet, daß die weiteren Kanäle (k - p, k + q) eine erste Zahl (q) von Kanälen unmittelbar oberhalb und eine zweite Zahl (p) von Kanälen unmittelbar unterhalb des ausgewählten Kanales (k) umfassen.

4. Verfahren nach Anspruch 3, dadurch gekennzeichnet, daß die erste und die zweite Zahl (q, p) in Abhängigkeit von der Lage des ausgewählten Kanales (k) in dem Frequenzspektrum (10) bestimmt werden.

5. Verfahren nach einem der Ansprüche 1 bis 4, dadurch gekennzeichnet, daß aus den Abhörergebnissen der von der Datenübertragung ausgeschlossenen Kanäle (k - p, k + q) das Frequenzspektrum (16) des diese Kanäle (k - p, k + q) belegenden Primärnutzers (15) interpoliert wird und sämtliche in diesem Frequenzbereich (16) liegenden Kanäle zumindest einmal von der Datenübertragung ausgeschlossen werden.

6. Verfahren nach einem der Ansprüche 1 bis 5, dadurch gekennzeichnet, daß jedem Kanal zumindest eine Zustandsvariable (Z(k)) zugeordnet ist, deren Wert zyklisch aktualisiert wird und angibt, ob der ihr zugeordnete Kanal (k) durch Primärnutzer belegt ist.

7. Verfahren nach Anspruch 6, dadurch gekennzeichnet, daß zumindest einigen Kanälen weitere Zustandsvariablen zugeordnet sind, deren Werte aus Abhörergebnissen gebildet und dazu verwendet werden, den Wert der zumindest einen Zustandsvariablen (Z(k)) zu aktualisieren.

8. Verfahren nach Anspruch 6 oder Anspruch 7, dadurch gekennzeichnet, daß die Zustandsvariable (Z(k)) des ausgewählten Kanales (k) sowie die der weiteren Kanäle (k - p, k + q) auf einen Sperrwert (A) gesetzt werden, wenn das Abhören des ausgewählten Kanales (k) ergibt, daß ein Primärnutzer auf diesem Kanal (k) gerade sendet.

9. Verfahren nach einen der Ansprüche 6 bis 8, dadurch gekennzeichnet, daß bei jeder Aktualisierung die zumindest eine Zustandsvariable (Z(k)) dekrementiert/inkrementiert wird, sofern sie nicht bereits einen Freigabewert (F) aufweist, der angibt, daß der Kanal (k) nicht durch Primärnutzer belegt ist.

10. Verfahren nach einem der Ansprüche 6 bis 8, dadurch gekennzeichnet, daß die zumindest eine Zustandsvariable (Z(k)) des ausgewählten Kanales (k) dekrementiert/inkrementiert wird, wenn das Abhören dieses Kanales (k) ergibt, daß Primärnutzer auf ihm gerade nicht senden.

11. Verfahren nach einem der Ansprüche 6 bis 10, dadurch gekennzeichnet, daß nach der Aktualisierung zumindest der Wert der zumindest einen Zustandsvariablen (Z(k)) des ausgewählten Kanales (k) auf einen Freigabewert (11) abgefragt wird, um zu entscheiden, ob dieser Kanal (k) zur Datenübertragung zur Verfügung steht.

12. Verfahren nach einem der Ansprüche 1 bis 11, dadurch gekennzeichnet, daß bei dem Abhören eines ausgewählten Kanales (k) dessen Signalpegel (S) in zeitlichen Abständen (τ) N mal auf das Überschreiten einer Signalschwelle (S₀) abgetastet wird.

13. Verfahren nach Anspruch 12, dadurch gekennzeichnet, daß der Signalpegel (S) des abgetasteten Kanales (k) die Signalschwelle (S₀) M mal überschreiten muß, damit ein Senden von Primärnutzern auf diesem Kanal (k) erkannt wird.

14. Verfahren nach Anspruch 13, dadurch gekennzeichnet, daß M größer oder gleich N/2 sein muß, damit ein Senden von Primärnutzern auf dem ausgewählten Kanal (k) erkannt wird.

15. Verfahren nach Anspruch 13, dadurch gekennzeichnet, daß M manuell auf einen festen Wert (0 < M ≤ N) festgesetzt oder dynamisch in Abhängigkeit von einer Auswertung des Abhörens des ausgewählten Kanals (k) bestimmt wird.

## Claims

1. Process for operating a network of secondary users which utilises channels (f) in a frequency spectrum (10) used by primary users (11, 12, 15) by frequency hopping to transfer data, in which each channel (k) selected by the network of secondary users is, prior to a possible data transfer, scanned and checked as to whether primary users currently occupy this channel (k) and whereby the network of secondary users, depending on the results of this verification, either transmits data over the selected channel (k) or excludes this channel from data transmission and selects a new channel (k) for verification and possible data transmission, characterised in that in addition to the selected channel (k) further channels ( k - p, k + q) in the channel (k) range are excluded from data transmission at least once during further frequency hopping, if scanning the selected channel (k) results in recognising that primary users are currently transmitting on this channel (k).

2. Process according to claim 1, characterised in that the further channels (k - p, k + q) are determined depending on the location of the selected channel (k) within the frequency spectrum (10).

3. Process according to claims 1 or 2, characterised in that the further channels (k - p, k + q) comprise of a first number (q) of channels immediately above and a second number (p) of channels immediately below the selected channel (k).

4. Process according to claim 3, characterised in that the first and second number (q, p) are determined depending on the location of the selected channel (k) within the frequency spectrum (10).

5. Process according to claims 1 to 4, characterised in that the frequency spectrum (16) of the primary user (15) occupying those channels (k - p, k + q), which are excluded from data transmission as a result of the scan, is interpolated and all channels within this frequency range (16) are excluded at least once from data transmission.

6. Process according to claims 1 to 5, characterised in that at least one operand (Z(k)) is allocated to each channel, whose value is up-dated in regular cycles and which indicates whether the channel (k), to which it is allocated, is occupied by a primary user.

7. Process according to claim 3, characterised in that additional operands are allocated to at least some channels, the values of which are created from the scanning results and are used to up-date the value of at least one operand (Z(k)).

8. Process according to claims 6 or 7, characterised in that the operand (Z(k)) of the selected channel (k) and of the further channels (k - p, k + q) is set to a blocking value (A), if scanning the selected channel (k) indicates that primary users currently transmit on this channel (k).

9. Process according to one of the claims 6 to 8, characterised in that during every up-dating at least one operand (Z(k)) decrements/increments, as long as it does not already provide an enable value (F) which indicates that the channel (k) is not occupied by a primary user.

10. Process according to one of the claims 6 to 8, characterised in that at least the one operand (Z(k)) of the selected channel (k) decrements/increments, if scanning this channel (k) indicates that currently no primary user transmits on this channel (k).

11. Process according to one of the claims 6 to 10, characterised in that, following the up-dating, at least the value of the no less than one operand (Z(k)) of the selected channel (k) is scanned for an enable value (11) to decide, whether this channel (k) is available for data transmission.

12. Process according to one of the claims 1 to 11, characterised in that during scanning a selected channel (k) its signal level (S) is scanned in regular intervals (τ) N times to detect, whether the signal threshold (S₀) is exceeded.

13. Process according to claim 12, characterised in that the signal level (S) of the scanned channel (k) must exceed the signal threshold (S₀) M times to recognise the transmission by primary users on this channel (k).

14. Process according to claim 13, characterised in that M must be greater or equal to N/2, in order to recognise that primary users transmit on the selected channel (k).

15. Process according to claim 13, characterised in that M is set to a fixed value (0 < M ≤ N) manually or dynamically depending on the evaluation of the scanning of the selected channel (k).

## Revendications

1. Procédé pour exploiter un réseau d'utilisateurs secondaires, qui utilise des canaux (f) contenus dans un spectre de fréquences (10) utilisé par des utilisateurs primaires (11, 12, 15) dans le procédé de saut de fréquence pour la transmission de données, dans lequel un canal (k) sélectionné par le réseau d'utilisateurs secondaires est écouté avant une transmission de données possible et vérifié pour savoir si des utilisateurs primaires occupent ce canal (k) actuellement et, en fonction du résultat de cette vérification, soit le réseau d'utilisateurs secondaires transmet des données sur le canal sélectionné (k), soit il exclut ce canal de la transmission de données et sélectionne un nouveau canal (k) pour la vérification et la possibilité de transmission de données,
caractérisé en ce qu'en supplément du canal sélectionné (k), des canaux additionnels (k - p, k + q) situés dans la région du canal sélectionné (k) sont exclus au moins une fois de la transmission des données dans l'un des sauts de fréquence suivants lorsque l'écoute du canal sélectionné (k) montre que des utilisateurs primaires émettent actuellement sur ce canal.

2. Procédé selon la revendication 1, caractérisé en ce que les canaux additionnels (k - p, k + q) sont déterminés en fonction de la position du canal sélectionné (k) dans le spectre de fréquences (10).

3. Procédé selon la revendication 1 ou la revendication 2, caractérisé en ce que les canaux additionnels (k - p, k + q) comprennent un premier nombre (q) de canaux situés immédiatement au-dessus du canal sélectionné (k) et un deuxième nombre (p) de canaux situés immédiatement au-dessous du canal sélectionné (k).

4. Procédé selon la revendication 3, caractérisé en ce que les premier et deuxième nombres (q, p) sont déterminés en fonction de la position du canal sélectionné (k) dans le spectre de fréquences (10).

5. Procédé selon une des revendications 1 à 4, caractérisé en ce que sur la base des résultats d'écoute des canaux (k - p, k + q) qui sont exclus de la transmission des données, le spectre de fréquences (16) de l'utilisateur primaire (15) qui occupe ces canaux (k - p, k + q) est interpolé et tous les canaux contenus dans cette plage de fréquences (16) sont exclus au moins une fois de la transmission des données.

6. Procédé selon une des revendications 1 à 5, caractérisé en ce qu'à chaque canal est associée au moins une variable d'état (Z(k)) dont la valeur est actualisée cycliquement et indique si le canal (k) qui y est associé est occupé par des utilisateurs primaires.

7. Procédé selon la revendication 6, caractérisé en ce qu'à au moins quelques canaux, sont associées des variables d'état additionnelles dont les valeurs sont formées à partir de résultats d'écoute et utilisées pour actualiser la valeur d'au moins une variable d'état (Z(k)).

8. Procédé selon la revendication 6 ou la revendication 7, caractérisé en ce que la variable d'état (Z(k)) du canal sélectionné (k), ainsi que celle des canaux additionnels (k - p, k + q) sont mises à une valeur de blocage (A) lorsque l'écoute du canal sélectionné (k) indique qu'un utilisateur primaire émet actuellement sur ce canal (k).

9. Procédé selon une des revendications 6 à 8, caractérisé en ce qu'à chaque actualisation, au moins une variable d'état (Z(k)) est décrémentée/incrémentée si elle ne présente pas déjà une valeur de déblocage (R) qui indique que le canal (k) n'est pas occupé par des utilisateurs primaires.

10. Procédé selon une des revendications 6 à 8, caractérisé en ce qu'au moins une variable d'état (Z(k)) du canal sélectionné (k) est décrémentée/incrémentée lorsque l'écoute de ce canal (k) indique que des utilisateurs primaires n'émettent pas actuellement sur ce canal.

11. Procédé selon une des revendications 6 à 10, caractérisé en ce qu'après l'actualisation, au moins la valeur d'au moins une variable d'état (Z(k)) du canal sélectionné (k) est interrogée au sujet d'une valeur de déblocage (11) pour décider si ce canal (k) est disponible pour la transmission de données.

12. Procédé selon une des revendications 1 à 11, caractérisé en ce que, lors de l'écoute d'un canal sélectionné (k), le niveau de signal (S) de ce canal est exploré à des intervalles de temps (τ) N fois au sujet du dépassement d'un seuil de signal (S₀).

13. Procédé selon la revendication 12, caractérisé en ce que pour qu'une émission d'utilisateurs primaires sur ce canal (k) soit détectée, il faut que le niveau de signal (S) du canal exploré (k) dépasse M fois le seuil de signal (S₀).

14. Procédé selon la revendication 13, caractérisé en ce que, pour qu'une émission d'utilisateurs primaires sur le canal sélectionné (k) soit détectée, il faut que M soit supérieur ou égal à N/2.

15. Procédé selon la revendication 13, caractérisé en ce que M est fixé manuellement sur une valeur fixe (0 < M ≤ N) ou déterminé dynamiquement en fonction d'une exploitation de l'écoute du signal sélectionné (k).
